# EUROPEAN PATENT APPLICATION

(11) **EP 2 385 510 A2**
(43) Date of publication of application: **09.11.2011**
(21) Application number: 10736063.8
(22) Date of filing: 01.02.2010
(51) Int. Cl.: G08G 1/0969, G08G 1/0968

(54) **DEVICE FOR PROVIDING INFORMATION USING STRUCTURAL FORM AND METHOD THEREFOR**

(30) Priority: 02.02.2009 KR 20090007844
(71) Applicant: Thinkwaresystems Corp., Seoul 138-051 (KR)
(72) Inventor: LEE, Jae Min, Gyung-Gi do 465-708 (KR)
(74) Representative: Cabinet Plasseraud
(86) International application number: PCT/KR2010/000607
(87) International publication number: WO 2010/087672

(57) **Abstract**

An information providing apparatus and method are provided comprising an information designating unit designating an information display target and an information providing area for geographical data according to each type, and an information displaying unit displaying an information display target conforming to a type of the information providing area on the information providing area.

## Description

### BACKGROUND

### Field

The embodiments of this document are directed to a map providing system, and more specifically to an information providing apparatus and method that may effectively provide various types of information to be exposed on a map screen.

### Related Art

A geographic information system (GPS) is an information system that integrally processes attribute data associated with geographical information.

The GIS provides for easy search for location information, such as latitudes or longitudes, and may convert geographical information required by a user into a proper map image.

The GIS includes a database that maintains map data including POI (point of interest) and geometry data for an entire ma.

The geometry data includes geometrical information such as roads, rivers, mountains, buildings, or facilities, and the POI includes name information as text information for roads, buildings, or facilities.

Recently, a GIS-based map service is provided to a mobile terminal, such as navigation systems.

A navigation system includes a GPS (global positioning system) module. The navigation system receives predetermined data from a GPS satellite and calculates the position of a moving object. The navigation system may provide a map image in which the present location of the moving object is mapped to pre-stored map data together with a map image of an area desired by a user.

In addition to the POI, the navigation system may provide various types of information, such as places of interest, fun places, local specialties, local festivals, or advertisement information, which are helpful for driving or sightseeing.

The conventional information display method generally displays predetermined information at a predetermined location in a predetermined form. However, the criterion of effective information varies depending on a change in a location where information is displayed or a change in an environment. Accordingly, the conventional information method has a limit to effectively transferring information.

### SUMMARY

The embodiments of this document provide an information providing apparatus and method that may provide various types of information in more flexible forms according to a flexible criterion considering a change in a location where information is positioned on a map or a change in an environment.

According to an embodiment of this document, there is provided an information providing apparatus comprising an information designating unit designating an information display target and an information providing area for geographical data according to each type, and an information displaying unit displaying an information display target conforming to a type of the information providing area on the information providing area.

The information designating unit designates a structure having a shape as the information display target on the geographical data or designates a geographical location with no shape as the information display target on the geographical data.

The information displaying unit maps information corresponding to the type of the information providing area to the information display target. The information displaying unit changes information mapped to the information display target according to a change in an external environment. The external environment includes at least one of time, season, and weather.

According to an embodiment of this document, there is provided an information providing apparatus comprising an information designating unit designating an information display target and an information providing area for geographical data according to each type, a structure designating unit designating an information display structure for the designated information display target, and an information displaying unit displaying an information display target conforming to a type of the information providing area on the information providing area using the designated information display structure.

The information designating unit designates a structure having a shape or a shapeless geographical location as the information display target on the geographical data.

The information providing apparatus further comprises a structure adjusting unit adjusting the information display structure using a shape of a structure corresponding to the information display target.

The information displaying unit maps information corresponding to the type of the information providing area to the information display structure. The information displaying unit changes information mapped to the information display structure according to a change in an external environment. The external environment includes at least one of time, season, and weather.

According to an embodiment of this document, there is provided an information providing method comprising designating an information display target and an information providing area for geographical data according to each type, and displaying an information display target conforming to a type of the information providing area on the information providing area.

According to an embodiment of this document, there is provided an information providing method comprising designating an information display target and an information providing area for geographical data according to each type, designating an information display structure for the designated information display target, and displaying an information display target conforming to a type of the information providing area on the information providing area using the designated information display structure.

The embodiments of this document may provide information to be exposed on the map screen in more flexible, various forms according to a flexible criterion considering a change in an external environment, thus enhancing transfer of information.

### BRIEF DESCRIPTION OF THE DRAWINGS

The implementation of this document will be described in detail with reference to the following drawings in which like numerals refer to like elements:

Fig. 1 is a block diagram illustrating an internal structure of an information providing apparatus according to an embodiment of this document.

Figs. 2 and 3 illustrate examples of designating an information display target.

Fig. 4 illustrates an example of designating information providing areas.

Fig. 5 illustrates an example of displaying an information display target on an information providing area for the same type.

Figs. 6 and 7 illustrate examples of arranging an information display structure with respect to a structure having a shape.

Fig. 8 illustrates an example of displaying structures in a 2D map service.

Fig. 9 illustrates an example of displaying structures in a 3D map service.

Fig. 10 illustrates an example of arranging information display structures for shapeless geographical locations.

Fig. 11 is a flowchart illustrating an information providing method according to an embodiment of this document.

### DETAILED DESCRIPTION

Hereinafter, embodiments of this document will be described in detail with reference to the accompanying drawings.

As used herein, the term "information" may refer to the whole information including area information and advertisement information that may be exposed for purposes of transfer of information over a map screen providing a specific geographical location or path.

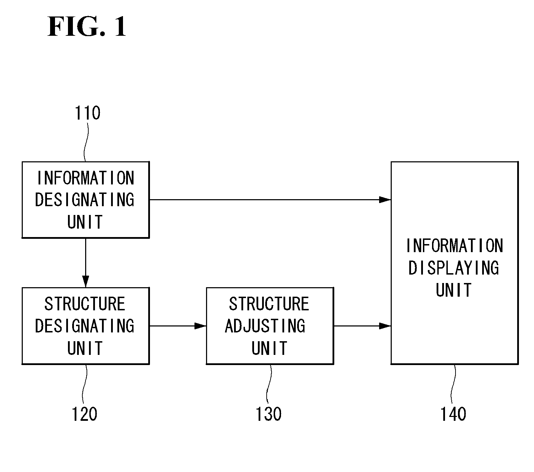

Fig. 1 is a block diagram illustrating an internal structure of an information providing apparatus according to an embodiment of this document.

Referring to Fig. 1, an information providing apparatus according to an embodiment includes an information designating unit 110, a structure designating unit 120, a structure adjusting unit 130, and an information displaying unit 140.

The information designating unit 110 designates a target for information display (also referred to as "information display target") and an area for information provision (also referred to as "information providing area") with respect to map data.

The information exposable on the map screen may be mapped to a structure having a shape or a shapeless structure, for example, a geographical location.

The information display target is a target for mapping and displaying the information, and among the geographical data, a structure having a shape or a shapeless geographical location may be designated as the information display target.

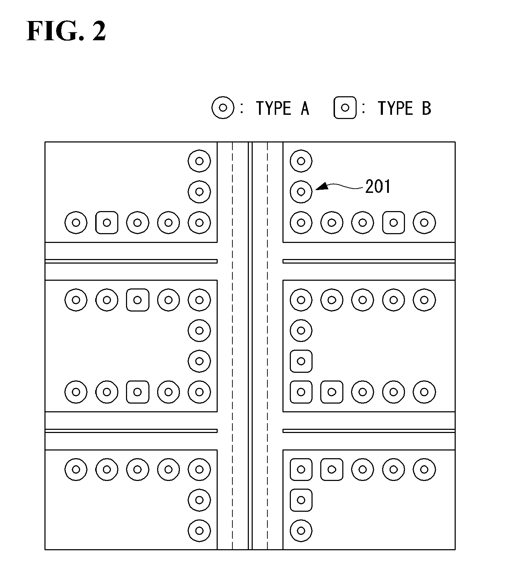

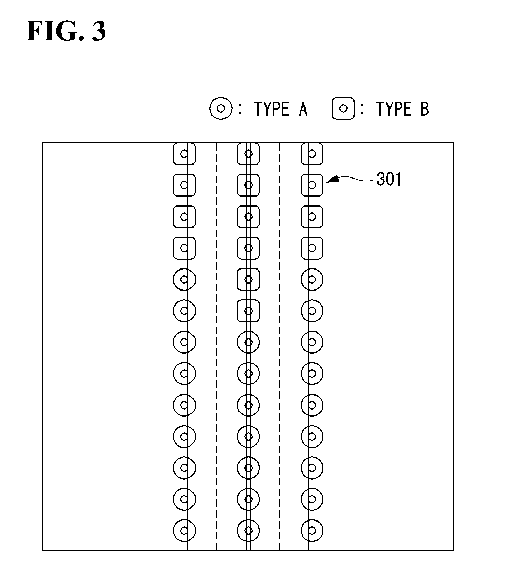

Figs. 2 and 3 illustrate examples of designating an information display target.

Referring to Fig. 2, a structure 201 having a shape, such as a building located along a road, may be designated as the information display target. Any structure having a shape may be entitled as the information display target.

Fig. 3 illustrates an example of designating as the information display target a roadside or a center of a road which does not have a shape. Referring to Fig. 3, even without any shape, a desired geographical location 301 may be designated as the information display target.

The information display target may be designated differently for each type. For example, the information display target may be differentiated according to the type of information to be displayed. The type of the information display target may be differentiated so that information belonging to type A is mapped to an information display target designated as type A and information belonging to type B is mapped to an information display target designated as type B.

The information providing area may be designated as an area including at least one information display target. Like the information display target, the information providing area may include a type.

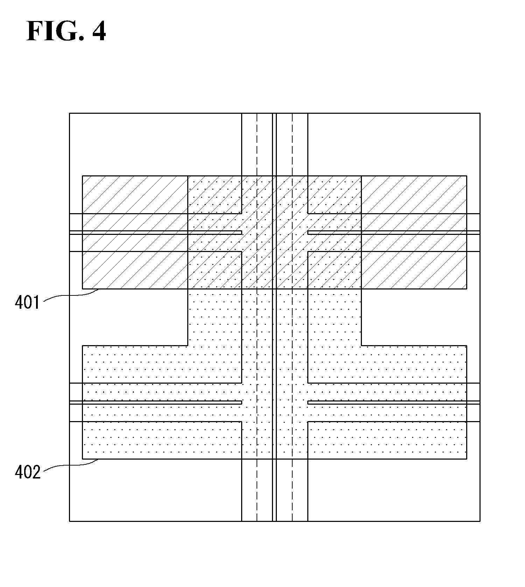

Fig. 4 illustrates an example of designating information providing areas.

Information providing areas 401 and 402 may be designated as various types of areas over the map data. The information providing areas 401 and 402 each may be designated differentially for each type. The information providing areas 401 and 402 may overlap each other. Information display targets of different types may be together displayed on the overlapping portion.

The information display target may include a plurality of to-be-mapped information. Accordingly, a specific type of information providing area may be designated to display situationally relevant information to the information display target depending on changes in various external environments. The external environments include time, season, and weather. For example, information to be displayed through the information display target may be determined according to the type of the information providing area and changes in the external environments.

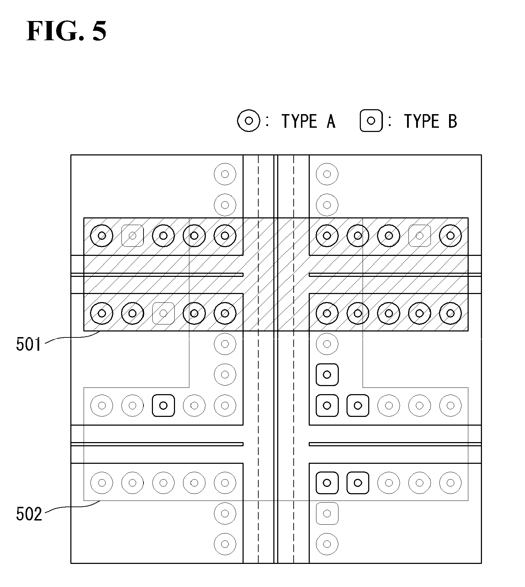

Fig. 5 illustrates an example of displaying an information display target on an information providing area for the same type.

For example, as shown in Fig. 5, an information display target conforming to type A is displayed on an information providing area 501 of type A, and an information display target conforming to type B is displayed on an information providing area 502 of type B.

Specifically, information display targets of type A are displayed on the information providing area 501 of type A, and information display targets of type B are displayed on the information providing area 502 of type B. The information display target may display information designated by the corresponding information providing area when the type of the information display target conforms to the type of the information providing area to which the information display target belongs.

Information to be displayed through the information display target on the information providing areas 501 and 502 of types A and B may be changed depending on the changes in the external environments.

As the external environments change, the information displayed on the information display target may be varied without a change in type of the information providing area.

Returning to Fig. 1, the structure designating unit 120 designates an information display structure for the information display target.

The information display target may use an information display structure having a specific shape for displaying to-be-mapped information. The information display target may display a type of information that is designated on the information providing area using the information display structure.

The information display structure for the information display target may have a planar shape in the case of a two-dimensional (2D) map service providing a map screen in 2D, and may have a stereoscopic shape in the case of a 3D map service providing a map screen in 3D. The information display structures may have different shapes according to the type of the information display target.

Turning back to Fig. 1, the structure adjusting unit 130 arranges an information display structure corresponding to the type of information display target to geographic data corresponding to the information display target and adjusts the shape of the information display structure.

The information display structure may be arranged to a structure with a shape or a geographical location with no shape depending on the corresponding information display target.

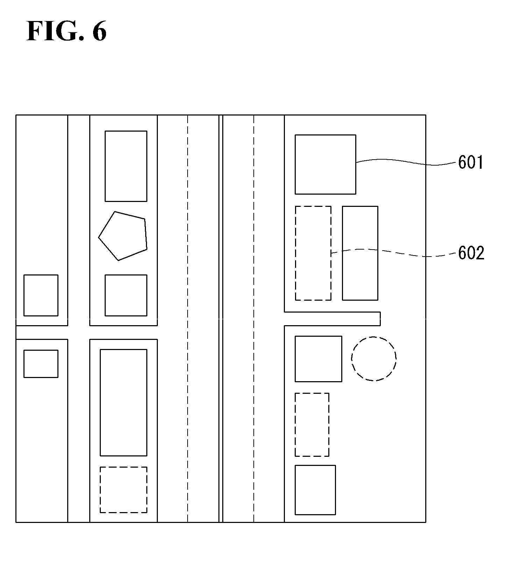

In the case that the information display target corresponds to a structure having a shape, the information display structure is adjusted to fit for the shape of the structure corresponding to the information display target. It is because, as shown in Fig. 6, even though the information display targets have the same type, the structures designated as the information display targets may have different shapes. For example, even though an information display target 601 of type A, which is represented in solid lines, and an information display target 602 of type B, which is represented in dotted lines, have the same type, the targets 601 and 602 have different shapes.

The structure adjusting unit 130 may perform at least one of translation, rotation, and scaling on the information display structure within the shape of the structure corresponding to the information display target.

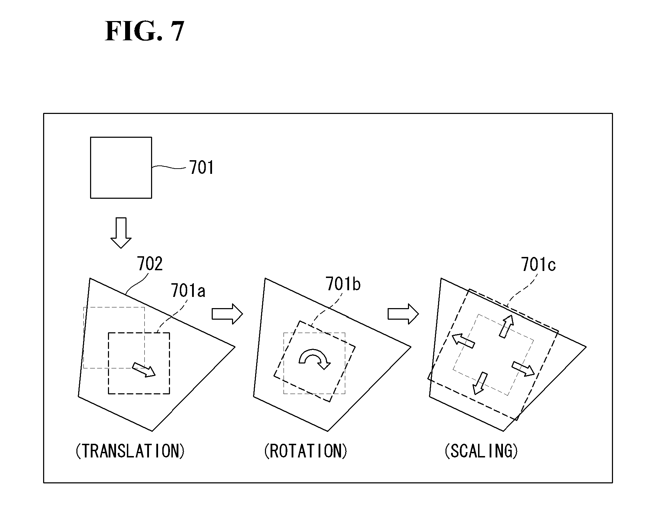

Fig. 7 illustrates an example of adjusting an information display structure using a shape of a structure.

After an information display structure 701 is arranged on a location of a structure 702 corresponding to the information display target, the information display structure 701a may be translated to a central point of the structure 702. Further, the information display structure 701b may be rotated or the information display structure 701c may be scaled up or down according to a predetermined rule within the shape of the structure 702.

By translating, rotating, or scaling up or down the information display structure 701 within the shape of the structure 702 corresponding to the information display target, the shape of the information display structure 701 may be individually adjusted to fit for the structure 702.

Depending on the service type on the map screen, a portion used for displaying information in the structure corresponding to the information display target may be changed.

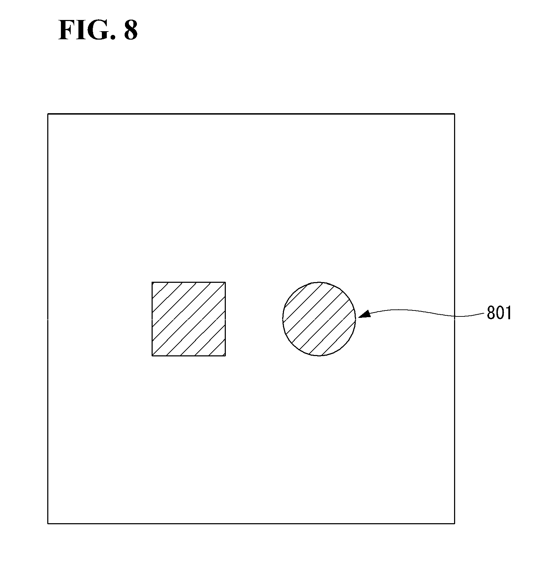

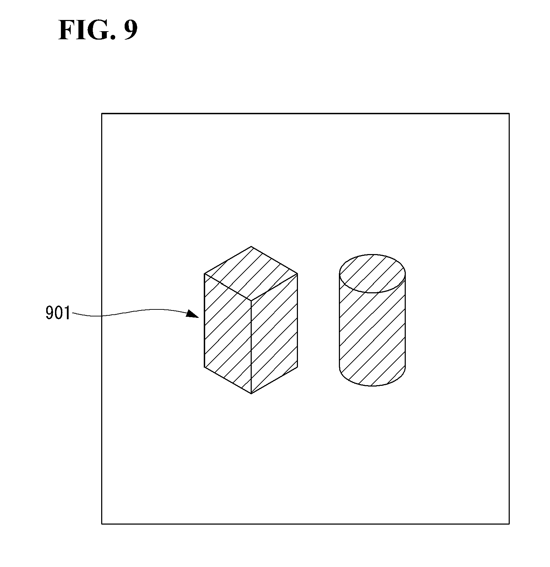

Fig. 8 illustrates an example of displaying structures in a 2D map service, and fig. 9 illustrates an example of displaying structures in a 3D map service. The structure has a planar shape 801 in the 2D map service and has a 3D shape 901 in the 3D map service. The 3D shapes 901 may be varied depending on a view point.

In the 2D map service, the planar shape 801 may be used as an area for arranging the information display structure, and in the 3D map service, the 3D shape 901 may be used as an area for arranging the information display structure.

In the case that the information display target corresponds to a geographical location with no shape, it is unnecessary to individually adjust the information display structure.

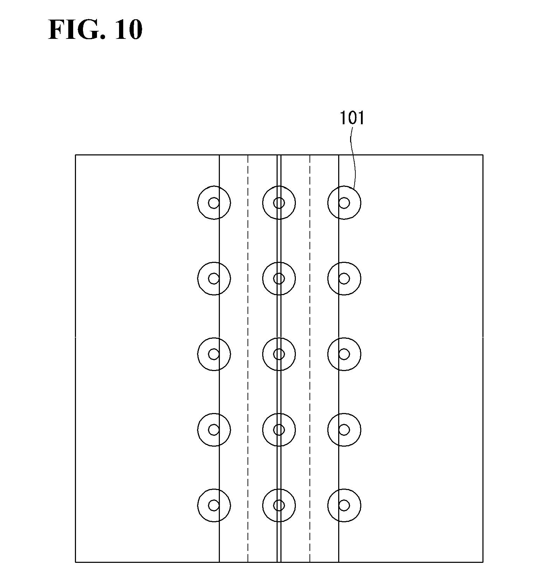

Fig. 10 illustrates an example of arranging information display structures for shapeless geographical locations.

The structure adjusting unit 130 arranges an information display structure corresponding to a type of the information display target to a geographical location 101 corresponding to the information display target and then adjusts the scale of the information display structure according to a level of the map screen.

Referring back to Fig. 1, the information displaying unit 140 displays an information display target conforming to the type of the information providing area on the information providing area using the information display structure.

The information displaying unit 140 maps information corresponding to the type of the information providing area to the information display target and then displays the information display structure corresponding to the information display target on the information display structure.

The information displaying unit 140 detects the external environment and changes information displayed on the information display structure on the information providing area depending on a change in the detected external environment.

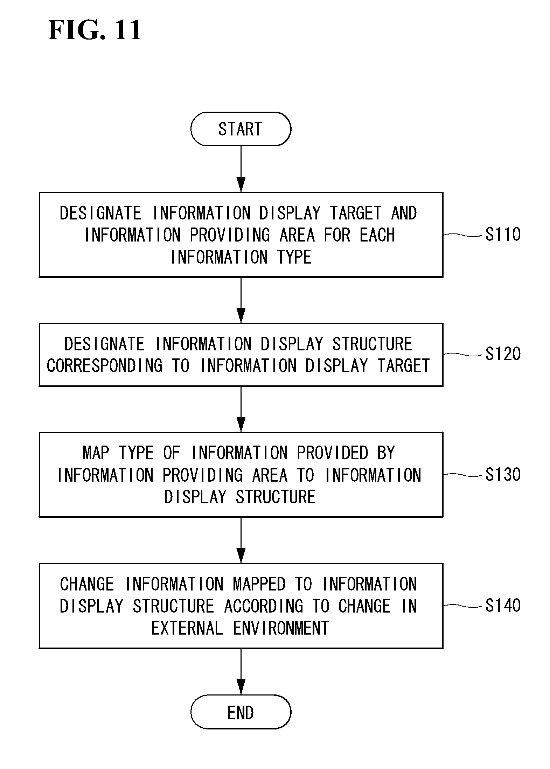

Fig. 11 is a flowchart illustrating an information providing method according to an embodiment of this document.

Referring to Fig. 11, an information providing method according to an embodiment includes the following steps.

In step S110, the information providing apparatus may designate an information display target and an information providing area for geographical data differentially for each type. The differential designation may be made so that the type of information display target corresponds to the type of information providing area. The information providing apparatus may designate as the information display target a structure having a shape or a geographical location with no shape among the geographical data. The information providing apparatus may designate the information providing area by differentiating the area from the geographical data in various forms.

In step S120, the information providing apparatus may designate an information display structure corresponding to the designated information display target. The information providing apparatus may designate the information display structure using structures having different shapes depending on the type of the information display target.

In step S130, the information providing apparatus may display an information display target conforming to the type of information providing area using the designated information display structure on the information providing area. The information providing apparatus may map a type of information designated on the information providing area to the information display structure corresponding to the information display target. In step S140, the information providing apparatus may change information mapped to the information display structure according to a change in an external environment, such as time, season, or weather. The information providing apparatus may map a plurality of information to the information display target and may thus vary information displayed on the information display structure under the circumstance where the types of the information providing area and the information display target are maintained against the change in the external environment.

According to the embodiments of this document, the information display targets having the same type may be displayed on the information providing area, and the information to be displayed on the information display structure may be mapped using the information display structure corresponding to the type of information display target.

The embodiments of this document allow information to be more flexibly displayed on the map screen by changing the information mapped to the information display structure depending on the change in the external environment.

The information providing method according to the embodiments of this document may be implemented as programs that may executed by various computer means and recorded in a computer-readable medium. The computer-readable medium may contain a program command, a data file, and a data structure, alone or in a combination thereof. The program recorded in the medium may be one specially designed or configured for the embodiments of this document or one known to those of ordinary skill in the art. Examples of the computer-readable medium may include magnetic media, such as hard disks, floppy disks, or magnetic tapes, optical media, such as CD-ROMs or DVDs, magnetooptical media, such as floptical disks, ROMs, RAMs, flash memories, or other hardware devices that are configured to store and execute program commands. Examples of the program may include machine language codes such as those made by a compiler as well as high-class language codes executable by a computer using an interpreter. The above-listed hardware devices may be configured to operate as one or more software modules to perform the operations according to the embodiments of this document, and vice versa.

According to the embodiments of this document, the information providing apparatus and method using the shape of a structure may provide information to be exposed on the map screen in various flexible forms based on a flexible criterion depending on a change in an external environment, thus enhancing efficiency of transferring information.

The embodiments of this document have been explained above with reference to exemplary embodiments. It will be evident to those skilled in the art that various modifications may be made thereto without departing from the broader spirit and scope of the embodiments. Further, although the embodiments have been described in the context its implementation in particular environments and for particular applications, those skilled in the art will recognize that this document's usefulness is not limited thereto and that the embodiments can be beneficially utilized in any number of environments and implementations. The foregoing description and drawings are, accordingly, to be regarded in an illustrative rather than a restrictive sense.

## Claims

1. An information providing apparatus comprising:
an information designating unit configured to designate an information display target and an information providing area for geographical data according to each type; and
an information displaying unit configured to display an information display target conforming to a type of the information providing area on the information providing area.

2. The information providing apparatus of claim 1, wherein the information designating unit designates a structure having a shape as the information display target on the geographical data.

3. The information providing apparatus of claim 1, wherein the information designating unit designates a geographical location with no shape as the information display target on the geographical data.

4. The information providing apparatus of claim 1, wherein the information designating unit designates an area including at least one information display target as the information providing area.

5. The information providing apparatus of claim 1, wherein the information displaying unit maps information corresponding to the type of the information providing area to the information display target.

6. The information providing apparatus of claim 5, wherein the information displaying unit changes information mapped to the information display target according to a change in an external environment.

7. The information providing apparatus of claim 6, wherein the external environment includes at least one of time, season, and weather.

8. An information providing apparatus comprising:
an information designating unit configured to designate an information display target and an information providing area for geographical data according to each type;
a structure designating unit configured to designate an information display structure for the designated information display target; and
an information displaying unit configured to display an information display target conforming to a type of the information providing area on the information providing area using the designated information display structure.

9. The information providing apparatus of claim 8, wherein the information designating unit designates a structure having a shape as the information display target on the geographical data.

10. The information providing apparatus of claim 9, further comprising a structure adjusting unit adjusting the information display structure using a shape of a structure corresponding to the information display target.

11. The information providing apparatus of claim 10, wherein the structure adjusting unit performs at least one of translation, rotation, and scaling on the information display structure within the shape of the structure.

12. The information providing apparatus of claim 8, wherein the information designating unit designates a geographical location with no shape as the information display target on the geographical data.

13. The information providing apparatus of claim 12, further comprising a structure adjusting unit adjusting a scale of the information display structure on a geographical location corresponding to the information display target.

14. The information providing apparatus of claim 8, wherein the information displaying unit maps information corresponding to the type of the information providing area to the information display structure.

15. The information providing apparatus of claim 14, wherein the information displaying unit changes information mapped to the information display structure according to a change in an external environment.

16. The information providing apparatus of claim 15, wherein the external environment includes at least one of time, season, and weather.

17. An information providing method comprising:
designating an information display target and an information providing area for geographical data according to each type; and
displaying an information display target conforming to a type of the information providing area on the information providing area.

18. The information providing method of claim 17, wherein designating the information display target includes designating a structure having a shape as the information display target on the geographical data.

19. The information providing method of claim 17, wherein designating the information display target includes designating a geographical location with no shape as the information display target on the geographical data.

20. The information providing method of claim 17, wherein designating the information providing area includes designating an area including at least one information display target as the information providing area.

21. The information providing method of claim 17, wherein displaying the information display target includes mapping information corresponding to the type of the information providing area to the information display target.

22. The information providing method of claim 21, wherein displaying the information display target includes changing information mapped to the information display target according to a change in an external environment.

23. The information providing method of claim 22, wherein the external environment includes at least one of time, season, and weather.

24. An information providing method comprising:
designating an information display target and an information providing area for geographical data according to each type;
designating an information display structure for the designated information display target; and
displaying an information display target conforming to a type of the information providing area on the information providing area using the designated information display structure.

25. The information providing method of claim 24, wherein designating the information display target includes designating a structure having a shape as the information display target on the geographical data.

26. The information providing method of claim 25, further comprising a structure adjusting unit adjusting the information display structure using a shape of a structure corresponding to the information display target.

27. The information providing method of claim 26, wherein adjusting the information display structure includes performing at least one of translation, rotation, and scaling on the information display structure within the shape of the structure.

28. The information providing method of claim 24, wherein designating the information display target includes designating a geographical location with no shape as the information display target on the geographical data.

29. The information providing method of claim 28, further comprising adjusting a scale of the information display structure on a geographical location corresponding to the information display target.

30. The information providing method of claim 24, wherein displaying the information display target includes mapping information corresponding to the type of the information providing area to the information display structure.

31. The information providing method of claim 30, wherein displaying the information display target includes changing information mapped to the information display structure according to a change in an external environment.

32. The information providing method of claim 31, wherein the external environment includes at least one of time, season, and weather.

33. A computer readable recording medium storing a program performing the method of any one of claims 17 to 32.
